# EUROPÄISCHE PATENTSCHRIFT

(11) **EP 1 730 022 B1**
(45) Veröffentlichungstag und Bekanntmachung des Hinweises auf die Patenterteilung: **07.05.2008**
(21) Anmeldenummer: 05715907.1
(22) Anmeldetag: 10.03.2005
(51) Int. Cl.: B62J 17/04, F16B 5/00

(54) **MOTORRADVERKLEIDUNG**
MOTOR CYCLE FAIRING
HABILLAGE DE MOTO

(30) Priorität: 31.03.2004 DE 102004016363
(43) Veröffentlichungstag der Anmeldung: 13.12.2006
(73) Patentinhaber: Bayerische Motorenwerke Aktiengesellschaft, 80809 München (DE)
(72) Erfinder: MASSEPP, Siegfried, 80689 München (DE)
(86) Internationale Anmeldenummer: PCT/EP2005/002527
(87) Internationale Veröffentlichungsnummer: WO 2005/097588

(56) Entgegenhaltungen:
- DE-A1- 3 829 525
- FR-A- 2 748 445
- US-A- 4 466 754
- PATENT ABSTRACTS OF JAPAN Bd. 2000, Nr. 05, 14. September 2000 (2000-09-14) & JP 2000 062668 A (SUZUKI MOTOR CORP), 29. Februar 2000 (2000-02-29)

## Beschreibung

Die vorliegende Erfindung betrifft eine Motorradverkleidung.

Aus der US 4 466 754 ist eine Bauteilverbindung bekannt, die ein erstes und ein zweites formschlüssig miteinander verbundenes Teil aufweist. Die beiden Teile sind in zusammengebautem Zustand durch ein clipartiges Federelement gegen Lösen gesichert.

Moderne Motorräder weisen üblicherweise eine Verkleidung auf, die durch mehrere einzelne Verkleidungsteile gebildet ist. Die Verkleidung besteht einerseits aus intransparenten Verkleidungsteilen, die häufig in der Farbe des Motorrads lackiert sind und aus einem im Lenkerbereich angeordneten, transparenten Windschild. Bei manchen Motorrädern ist das Windschild mittels Befestigungsschrauben an separaten "Verkieidungshalteelementen" oder an anderen Verkleidungselementen festgeschraubt. Zum Festschrauben des Windschilds sind im Windschild üblicherweise Bohrungen vorgesehen, in welche die Schrauben eingesetzt sind. Da die gesamte Verkleidung während des Betriebs starken Vibrationen ausgesetzt ist, besteht die Gefahr, dass im Bereich der Bohrungen Risse im Windschild entstehen.

Aufgabe der Erfindung ist es, eine Motorradverkleidung zu schaffen, bei der einzelne Verkleidungsteile in einfacher Weise miteinander verbunden sind und die Gefahr der Rissbildung an Verbindungsstellen minimiert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Motorradverkleidung aus, bei der ein erstes Verkleidungsteil und ein zweites Verkleidungsteil vorgesehen ist, die formschlüssig miteinander verbunden sind. Bei dem ersten Verkleidungsteil kann es sich um ein transparentes Windschild und bei dem zweiten Verkleidungsteil um ein intransparentes Kunststoffteil der übrigen Motorradverkleidung handeln oder umgekehrt. Der Kern der Erfindung besteht darin, dass am ersten Verkleidungsteil ein erstes Formschlusselement und am zweiten Verkleidungsteil ein zweites Formschlusselement vorgesehen ist, wobei das zweite Formschlusselement formschlüssig in das erste Formschlusselement eingesetzt ist und ein klammerartiges Element vorgesehen ist, das die beiden Formschlusselemente umgreift und gegen Lösen sichert, und wobei das klammerartige Element zwei Federarmpaare aufweist.

Die Verkleidungsteile sind vorzugsweise aus Kunststoff hergestellt. Die Formschlusselemente sind vorzugsweise einstückig mit den Verkleidungsteilen verbunden. Die Formschlusselemente können zusammen mit dem jeweiligen Verkleidungsteil im Spritzgussverfahren hergestellt werden.

Das erste Formschlusselement kann durch einen an das erste Verkleidungsteil angespritzten quaderartigen Abschnitt und zwei seitlich davon abstehende flügelartige Abschnitte gebildet sein. Während der quaderartige Abschnitt mit dem ersten Verkleidungsteil verbunden ist, sind die flügelartigen Abschnitte jeweils beabstandet von dem ersten Verkleidungselement angeordnet. Das heißt, zwischen den mit dem quaderartigen Abschnitt verbundenen flügelartigen Abschnitten und dem ersten Verkleidungsteil ist ein "Spalt" vorgesehen.

Das zweite "Formschlusselement" ist vorzugsweise komplementär zu dem ersten Formschlusselement gestaltet. Das zweite Formschlusselement kann durch zwei winkelartige bzw. hakenartige Elemente gebildet sein. Die beiden winkelartigen bzw. hakenartigen Elemente sind in einem Abstand voneinander angeordnet. Der Abstand ist so groß, dass der quaderartige Abschnitt des ersten Formschlusselements gerade zwischen die beiden winkelartigen Elemente eingeschoben werden kann. Ein erster Schenkel der winkelartigen Elemente ist jeweils mit dem zweiten Verkleidungsteil verbunden. Ein zweiter Schenkel der winkelartigen Elemente steht, beabstandet von dem zweiten Verkleidungsteil, seitlich von dem zugeordneten ersten Schenkel ab. Wenn die beiden Formschlusselemente ineinander geschoben sind, dann liegen die seitlich abstehenden Schenkel der winkelartigen Elemente jeweils in einer Flucht mit den flügelartigen Abschnitten der ersten Formschlusselemente.

Jedes der Federarmpaare ist vorzugsweise in einer Seitenansicht des klammerartigen Elements U-förmig. Im montierten Zustand der Motorradverkleidung ist zwischen jedes der Federarmpaare jeweils ein Schenkel eines der winkelartigen Elemente und jeweils ein flügelartiger Abschnitt des ersten Formschlusselements eingeklemmt.

Im folgenden wird die Erfindung im Zusammenhang mit der Zeichnung näher erläutert.

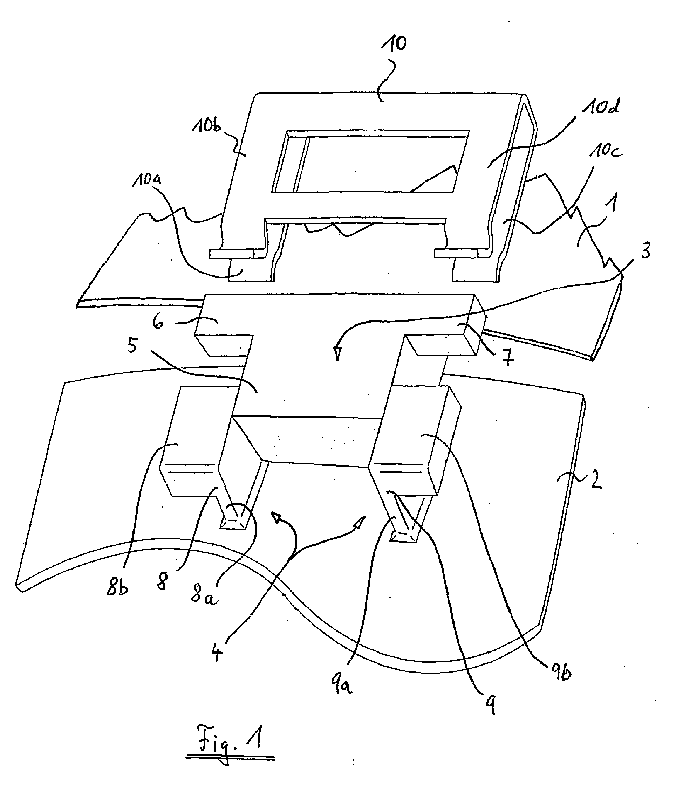

Die einzige Figur 1 zeigt das Grundprinzip der Erfindung. Eine Motorradverkleidung gemäß der Erfindung weist ein erstes Verkleidungsteil 1 und ein zweites Verkleidungsteil 2 auf. Die beiden Verkleidungsteile 1, 2 sind vorzugsweise aus Kunststoff hergestellt. Bei dem ersten Verkleidungsteil 1 kann es sich beispielsweise um ein Windschild handeln, das aus einem transparenten Material hergestellt ist. Das zweite Verkleidungsteil kann ein aus einem intransparenten Material hergestelltes Kunststoffteil oder ein lackiertes Kunststoffteil sein. Mit dem ersten Verkleidungsteil 1 ist einstückig ein erstes Formschlusselement 3 verbunden. Mit dem zweiten Verkleidungsteil 2 ist einstückig ein zweites Formschlusselement 4 verbunden.

Die Formschlusselemente 3, 4 können an das jeweilige Verkleidungsteil 1 bzw. angespritzt sein. Das erste Formschlusselement 3 weist einen quaderförmigen Mittelabschnitt 5 auf, der unmittelbar an das erste Verkleidungsteil angespritzt ist, und zwei seitlich von dem quaderförmigen Mittelabschnitt 5 abstehende flügelartige Abschnitte 6, 7. Die flügelartigen Abschnitte 6, 7 sind nicht unmittelbar mit dem Verkleidungsteil 1 verbunden, sondern weisen einen Abstand zu dem Verkleidungsteil 1 auf.

Das zweite Formschlusselement 4 ist durch ein erstes und ein zweites winkelartiges Element 8, 9 gebildet. Die beiden winkelartigen Elemente weisen jeweils einen ersten Schenkel 8a bzw. 9a auf, die einstückig mit dem zweiten Verkleidungsteil 2 verbunden sind und einen zweiten Schenkel 8b bzw. 9b, die rechtwinklig von dem zugeordneten ersten Schenkel 8a bzw. 9a abstehen. Wie aus Figur 1 ersichtlich ist, ist auch zwischen den beiden zweiten Schenkeln 8b bzw. 9b und dem zweiten Verkleidungsteil 2 ein Spalt vorgesehen. Die beiden winkelartigen Elemente 8, 9 sind derart voneinander beabstandet, dass zwischen die beiden ersten Schenkel 8a und 9a gerade der quaderförmige Mittelabschnitt des ersten Formschlusselements 3 eingeschoben werden kann.

In Figur 1 sind die beiden Verkleidungsteile 1, 2 in einem Zustand kurz vor dem Zusammenschieben der beiden Formschlusselemente 3, 4 dargestellt. Im montierten Zustand liegen der flügelartige Abschnitt 6 und der zweite Schenkel 8b sowie der flügelartige Abschnitt 7 und der zweite Schenkel 9b in einer Flucht zueinander. Nach dem Zusammenschieben der beiden Formschlusselemente 3, 4 wird ein klammerartiges Element 10 auf die flügelartigen Abschnitte 6, 7 und die zweiten Schenkel 8b, 9b aufgeschoben. Das klammerartige Element ist in einer Seitenansicht U-förmig und weist zwei Federarmpaare auf, die jeweils durch zwei Federarme 10a, 10b sowie 10c, 10d gebildet sind. Im montierten Zustand umgreifen die Federarme 10a und 10b den flügelartigen Abschnitt 6 sowie den ersten Schenkel 8b. Die Federarme 10c und 10d umgreifen im montierten Zustand den flügelartigen Abschnitt 7 und den ersten Schenkel 9b. Die beiden Verkleidungsteile 1, 2 sind also im montierten Zustand über die Formschlusselemente 3, 4 sowie durch das klammerartige Element 10 formschlüssig miteinander verbunden und gegen Lösen gesichert.

Ein wesentlicher Vorteil einer derartigen Verbindung der beiden Verkleidungsteile 1, 2 besteht darin, dass auf jegliche Art von Bohrungen bzw. Schrauben verzichtet werden kann. Eine Montage sowie eine Demontage ist einfach von Hand möglich.

## Patentansprüche

1. Motorradverkleidung, mit
einem ersten Verkleidungsteil (1), das mit einem zweiten Verkleidungsteil (2) formschlüssig verbunden ist, wobei
das erste Verkleidungsteil (1) ein erstes Formschlusselement (3) und das zweite Verkleidungsteil (2) ein zweites Formschlusselement (4) aufweist, in welches das erste Formschlusselement (3) eingesetzt ist, und wobei ein klammerartiges Element (10) vorgesehen ist, das die beiden Formschlusselemente (3, 4) umgreift und gegen Lösen sichert,
und wobei das klammerartige Element (10) zwei Federarmpaare (10a, 10b; 10c, 10d) aufweist, welche die beiden Formschlusselemente (3, 4) umgreifen.

2. Motorradverkleidung nach Anspruch 1, wobei das erste Formschlusselement (3) einstückig mit dem ersten Verkleidungsteil (1) und das zweite Formschlusselement (4) einstückig mit dem zweiten Verkleidungsteil (2) verbunden ist, wobei die Verkleidungsteile (1, 2) und die Formschlusselemente (3, 4) aus Kunststoff bestehen.

3. Motorradverkleidung nach einem der Ansprüche 1 oder 2, wobei das erste Formschlusselement (3) einen quaderartigen Mittelabschnitt (5) und zwei flügelartige Abschnitte (6, 7) aufweist, die aufeinander gegenüberliegenden Seiten von dem quaderartigen Mittelabschnitt (5) abstehen.

4. Motorradverkleidung nach Anspruch 3, wobei zwischen den flügelartigen Abschnitten (6, 7) und dem ersten Verkleidungselement (1) jeweils ein Spalt vorgesehen ist.

5. Motorradverkleidung nach einem der Ansprüche 1 bis 4, wobei das zweite Formschlusselement (4) durch zwei winkelartige Elemente (8, 9) gebildet ist, die derart voneinander beabstandet angeordnet sind, dass der quaderartige Mittelabschnitt (5) des ersten Formschlusselements (3) zwischen die beiden winkelartigen Elemente (8, 9) einschiebbar ist.

6. Motorradverkleidung nach Anspruch 5, wobei jedes der winkelartigen Elemente (8, 9) jeweils einen ersten Schenkel (8a, 9a) aufweist, der mit dem zweiten Verkleidungsteil (2) verbunden ist und jeweils einen seitlich von dem ersten Schenkel (8a, 9a) abstehenden zweiten Schenkel (8b, 9b).

7. Motorradverkleidung nach Anspruch 6, wobei zwischen den seitlich abstehenden zweiten Schenkeln (8b, 9b) und dem zweiten Verkleidungselement (2) jeweils ein Spalt vorgesehen ist.

8. Motorradverkleidung nach einem der Ansprüche 6 oder 7, wobei jeweils einer der zweiten Schenkel (8b, 9b) mit jeweils einem der flügelartigen Abschnitte (6, 7) in einer Flucht liegt.

9. Motorradverkleidung nach einem der Ansprüche 6 bis 8, wobei zwischen jedes der Federarmpaare (10a, 10b; 10c, 10d) jeweils einer der flügelartigen Abschnitte (6, 7) und jeweils einer der zweiten Schenkel (8b, 9b) eingeklemmt ist.

10. Motorradverkleidung nach einem der Ansprüche 1 bis 9, wobei das klammerartige Element (10) in einer Seitenansicht U-förmig ist.

11. Motorradverkleidung nach einem der Ansprüche 1 bis 10, wobei das erste Verkleidungsteil (1) ein transparentes Windschild und das zweite Verkleidungsteil (2) ein intransparentes Kunststoffteil ist, oder umgekehrt.

## Claims

1. A motorcycle covering comprising
a first part (1) positively connected to a second part (2), wherein
the first part (1) comprises a first positive closing element (3) and a second part (2) comprises a second positive closing element (4) into which the first element (3) is inserted, and wherein a clamp-like element (10) grips round the two positive closing elements (3, 4) and prevents them coming apart,
and wherein the clamp-like element (10) comprises two pairs of spring arms (10a, 10b; 10c, 10d) which grip round the two positive closing elements (3, 4).

2. A motorcycle covering according to claim 1, wherein the first positive closing element (3) is integral with the first covering part (1) and the second positive closing element (4) is integral with the second covering part (2), wherein the covering parts (1, 2) and the positive closing elements (3, 4) are made of plastics material.

3. A motorcycle covering according to claim 1 or claim 2, wherein the first positive closing element (3) has a cuboidal middle portion (5) and two wing-like portions (6, 7) which project on opposite sides of the cuboidal middle portion (5).

4. A motorcycle covering according to claim 3, wherein a gap is left between the wing-like portions (6, 7) and the first covering element (1).

5. A motorcycle covering according to any of claims 1 to 4, wherein the second positive closing element (4) is made up of two angular elements (8, 9) spaced apart so that the cuboidal middle portion (5) of the first positive closing element (3) is insertable between the two angular elements (8, 9).

6. A motorcycle covering according to claim 5, wherein each angular element (8, 9) has a first limb (8a, 9a) connected to the second covering part (2) and a second limb (8b, 9b) projecting from the first limb (8a, 9a).

7. A motorcycle covering according to claim 6, wherein a gap is left between the laterally projecting second limbs (8b, 9b) and the second covering element (2).

8. A motorcycle covering according to claim 6 or claim 7, wherein the two limbs (8b, 9b) are each in line with one of the wing-like portions (6, 7).

9. A motorcycle covering according to any of claims 6 to 8, wherein one of the wing-like portions (6, 7) and one of the second limbs (8b, 9b) is clamped between each pair of spring arms (10a, 10b; 10c, 10d).

10. A motorcycle covering according to any of claims 1 to 9, wherein the clamp-like element (10) is U-shaped in side view.

11. A motorcycle covering according to any of claims 1 to 10, wherein the first covering part (1) is a transparent windscreen and the second covering element (2) is a non-transparent plastics material part, or vice versa.

## Revendications

1. Habillage de moto comprenant :
- une première pièce d'habillage (10) reliée à une seconde pièce d'habillage (2) par une liaison par la forme ;
la première pièce d'habillage (1) ayant un premier élément de liaison par la forme (3) et le second élément d'habillage (2) ayant un second élément de liaison par la forme (4) recevant le premier élément de liaison par la forme (3) ; et
- un élément (10) en forme de pinces qui entoure les deux éléments de liaison par la forme (3, 4) et les verrouille ;
l'élément en forme de pinces (10) comportant deux paires de bras élastiques (10a, 10b; 10c, 10d) qui entourent les deux éléments de liaison par la forme (3, 4).

2. Habillage de moto selon la revendication 1,
selon lequel
le premier élément de liaison par la forme (3) fait corps avec la première pièce d'habillage (1) et le second élément de liaison par la forme (4) fait corps avec la seconde pièce d'habillage (2), les pièces d'habillage (1, 2) et les éléments de liaison par la forme (3, 4) étant en matière plastique.

3. Habillage de moto selon l'une des revendications 1 ou 2,
selon lequel
le premier élément de liaison par la forme (3) comporte un segment médian (5) cuboïde et deux segments (6, 7) formant des ailes venant en saillie des côtés opposés du segment médian (5) cuboïde.

4. Habillage de moto selon la revendication 3,
selon lequel
un intervalle respectif est prévu entre les segments en forme d'ailes (6, 7) et le premier élément d'habillage (1).

5. Habillage de moto selon l'une des revendications 1 à 4,
selon lequel
deux éléments de liaison par la forme (4) sont réalisés par deux éléments en cornière (8, 9) écartés l'un de l'autre pour que le segment médian (5) cuboïde du premier élément de liaison par la forme (3) puisse se glisser entre les deux éléments en forme de cornière (8, 9).

6. Habillage de moto selon la revendication 5,
selon lequel
chacun des éléments en forme de cornières (8, 9) comporte une première branche (8a, 9a) reliée à la seconde pièce d'habillage (2) et chaque fois une seconde branche (8b, 9b) latéralement en saillie par rapport à la première branche (8a, 9a).

7. Habillage de moto selon la revendication 6,
selon lequel
un intervalle est prévu entre les secondes branches (8b, 9b) latéralement en saillie et le second élément d'habillage (2).

8. Habillage de moto selon l'une des revendications 6 ou 7,
selon lequel
l'une des secondes branches (8b, 9b) est alignée respectivement avec l'un des segments en forme d'aile (6, 7).

9. Habillage de moto selon l'une des revendications 6 à 8,
selon lequel
chacun des segments en forme d'ailes (6, 7) et chacune des secondes branches (8b, 9b) est serré entre chaque paire de bras élastiques (10a, 10b; 10c, 10d).

10. Habillage de moto selon l'une des revendications 1 à 9,
selon lequel
l'élément (10) en forme de pinces a en vue de côté une forme de U.

11. Habillage de moto selon l'une des revendications 1 à 10,
selon lequel
le premier élément d'habillage (1) est un pare-brise transparent et le second élément d'habillage (2) est une pièce en matière plastique non transparente ou inversement.
